# NEW EUROPEAN PATENT SPECIFICATION

(11) **EP 0 956 921 B2**
(45) Date of publication and mention of the opposition decision: **12.08.2009**
(45) Mention of the grant of the patent: 14.07.2004
(21) Application number: 99108806.3
(22) Date of filing: 04.05.1999
(51) Int. Cl.: B23C 5/10, B23C 5/20

(54) **Indexable insert for end mill.**
Indexierbarer Schneideinsatz für Schaftfräser
Plaquette de coupe indexable pour fraise à queue

(30) Priority: 06.05.1998 SE 9801576
(43) Date of publication of application: 17.11.1999
(73) Proprietor: Sandvik Intellectual Property AB, 811 81 Sandviken (SE)
(72) Inventor: Aström, Magnus, 811 31 Sandviken (SE); Hansson, Lars-Ola, 811 61 Sandviken (SE)
(74) Representative: Stein, Jan Anders Lennart

(56) References cited:
- EP-A- 0 392 729
- EP-A- 0 416 901
- EP-A- 0 585 800
- EP-A- 0 587 109
- EP-A- 0 699 495
- WO-A-96/29172
- WO-A-96/29172
- AT-A- 001 420
- US-A- 4 632 607
- US-A- 4 940 369

## Description

The present invention relates to a new type of prismatic elongated cutting insert for application in rotary end mills for machining of metallic workpiece according to the preamble of claim 1. In particular the invention relates to a new type of cutting insert for end mills in order to with bigger precision be able to machine a 90-degree shoulder.

The development of milling inserts for end mills generally manufactured through form pressing and sintering of a cutting material forming powder is concentrated today on positive cutting edges with positive rake angles since these showed the ability to reduce the cutting forces and the power supply needed in a tooling machine at the same time as undesirable vibrations can be diminished thereby. It is often aimed to provide the tool with a geometry implying positive axial angle and simultaneously negative radial angle. In certain cases also a combination of positive axial angle and zero degree radial angle can be used in order to obtain a helical chip that provides best chip transport. The cutting insert is usually clamped with a centre locking screw in order to provide best possibilities for chip transport without problems.

One of drawbacks with existing usual indexable inserts for end mills has been that they do not enable with desired exactitude the machining of a 90-degree shoulder of a work piece. The problem with this type of machining is that of the workpiece wall does not become wholly straight. As a solution on this problem has been proposed to use a cutting insert, the cutting edges of which are spirally curved. EP-A-416 901 shows and describes such a tool. With such spiral cutting edges the cutting edge can easier come into engagement with the workpiece with an inclined curve of the cutting force up to a maximum value which lies under that one achieved with a straight cutting edge. The tool has in this way obtained a somewhat better stability at the same time as the tendency of tool vibrations has been somewhat diminished.

In view hereof it is a purpose with the invention to achieve a modified cutting insert of the type which described in EP-A-416 901, with improved geometrical optimization, implying constant functional edge angle In combination with step clearance along a wave shaped edge line intended to be mounted with large axial inclination in the tool. The specific features of the cutting insert according to the invention have been defined in the subsequent claims.

It is another purpose to achieve a milling tool, which become useful both for machining of a 90-degree shoulder that furthermore is useful for axial machining so called ramping, i.e. a tool, which machines the workpiece in both axial- and radial directions.

The invention will now be described in more detail in connection with the enclosed drawings where
Fig 1 shows a side view of a milling body with a clamped cutting insert according to the invention.
Fig 2 shows another partial side view of the tool according to Fig 1.
Fig 3 shows a plan view of the cutting insert according to the invention.
Fig 4 shows a side view of the cutting insert in Fig 3.
Fig 5 shows a sectional view along line V-V In Fig 3.
Fig 6 shows an end view of the cutting insert in Fig 1.
Fig 7 shows a perspective view of the cutting insert in Fig 1.
Fig 8 shows a plan view of the cutting insert.
Fig 9 shows a sectional view along line H-H in Fig 8.
Fig 10 shows a sectional view along line L-L in Fig 8, and
Fig 11 shows a side view of a milling body at machining in both axial- and radial direction.

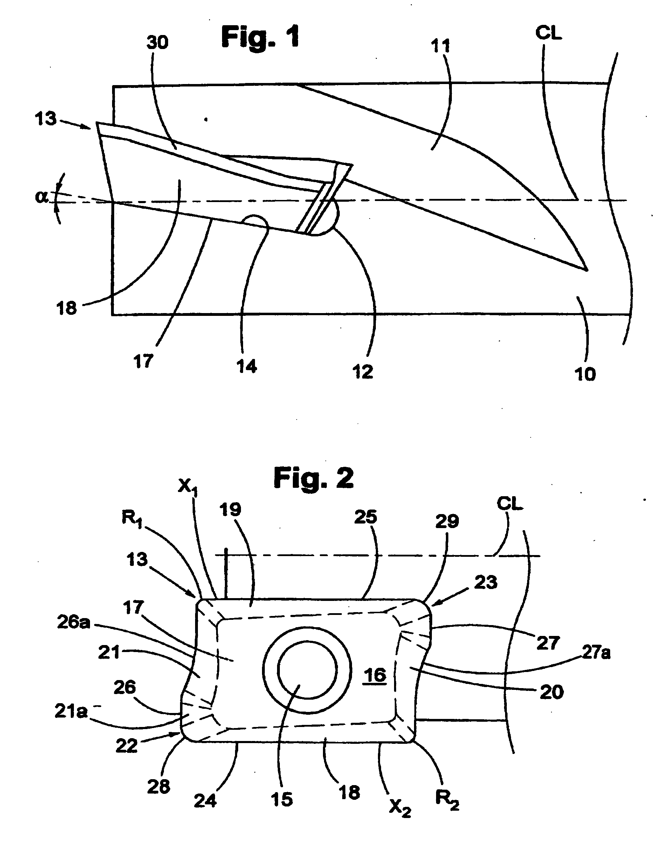

In figure 1-2 is illustrated an embodiment of an end mill, which is provided with a prismatic elongated indexable insert 13 according to the invention. Such a cutting insert is produced by means of a direct pressing method at which a cemented carbide forming powder first is given desired shape in a press and then is sintered in an oven at a temperature above 1000°C. The shrinking obtained at the sintering is something that must be considered at the dimensioning of the press device. The end mill comprises an essentially cylindrically shaped body 10, the rear upper part (not shown) of which is conical and intended to be clamped In a chuck or spindle of a tooling machine by means of which the body can be brought to rotate around a center axis CL. The forward part of the end mill has a number of spaced recesses 11 round the periphery, each of which has a pocket 12 confined by a bottom support surface 14 and one or more side supporting surfaces upstanding therefrom to receive a releaseably clamped indexable insert 13 in a work position therein. Alternatively a number of cutting inserts can furthermore be piled axially in matching pockets in said milling body.

The bottom surface 14 of said pocket 12 is provided at a longitudinal axis that forms a positive axial angle α simultaneously as it is provided at negative radial angle from a radial plane. The indexable insert 13 is preferably intended to be fastened in said pocket 12 by means of a clamp screw (not shown) which is received through a central aperture 15 of the insert and threadably engaged in the milling body 10. The size of this positive axial angle α should be chosen in the area of 0-20°, suitably 5-15°. The positive axial angle α will enable the chips to be easily lifted and thrown away from the workpiece.

The indexable insert 13 is essentially formed as a parallelogram, including two essentially parallel rectangular side faces, the top face 16 and the bottom surface 17 which surfaces may be mutually angled away from each other such as is shown in Fig 2-3. Between said top and bottom faces extend two longitudinal side surfaces 18, 19 and two end faces 20, 21 essentially perpendicularly oriented from said top and bottom faces wherein said side surfaces 18, 19 have considerably larger longitudinal extensions than the laterally extending end faces 20, 21. These side surfaces 18, 19 are generally inclined in acute angle from the top face 16 and in obtuse angle from the bottom surface 17. The end faces located in diametrically opposite corners are provided on portions 22, 23, which protrude axially from the remainder of said insert. Each of the intersection lines between the side surface 18, 19 and the top surface 16 of the cutting insert forms a main cutting edge 24 and 25 respectively whereas the intersections between said portions 22, 23 and the top surface 16 constitutes bevel faces 26 and 27 formed essentially right-angled in relation to said main cutting edges on said protruding parties 22 and 23 respectively Intended to plane out the machined surface and achieve an improved surface finish. The main cutting edges and said bevel faces are separated in each corner of smoothly rounded corner edges 28 and 29 respectively, the curvature of which is chosen such that during machining of the workpiece a curved portion with radius 0.4-6.4 mm is obtained. In order to attain this the corner edges 28, 29 have such a shape that the radius closest to the straight main cutting edge and the bevel face 26, 27 is somewhat larger than the curved portion therebetween.

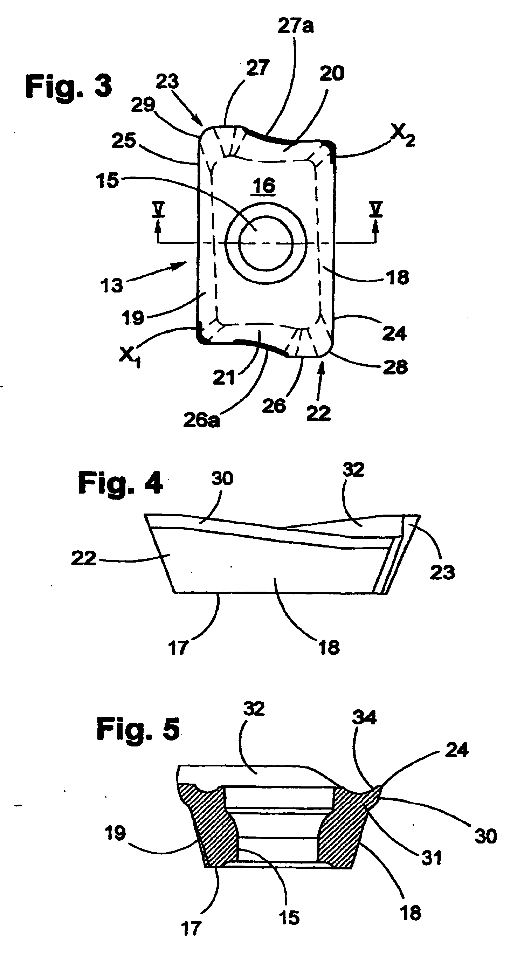

As is best shown for example In Fig 3 there is a smoothly curved edge portion 27a, adjacent to the bevel face 27. This edge portion 27a Is intended to be an active edge at axial ramping and drilling. This curved radius becomes successively bigger at positions more remote from the bevel face 27. A separate ramping edge X1, X2 is provided in connection to the curved edge R1 which forms a transition to the portion 26a. The size of the cutting edge R1 and R2 should be 0.4-0.6 mm.

It is distinguishing that the longitudinal side surfaces 18, 19 are designed with Increasing width towards the active cutting corner so that the cutting corner and the curved corner edge 28, 29 becomes situated on an elevated portion of the cutting insert. The cutting insert is simultaneously formed such that both the side surfaces 18, 19 and the end faces 20, 21 appear with positive clearance angle along the entire cutting edge in relation to the top face 16 of the cutting insert. It is furthermore distinguishing that the longitudinal side surfaces 18, 19 of the cutting insert appear with wave shaped primary clearance surfaces 30 along the entire main cutting edge 24 (similarly along the main cutting edge 25), with large axial inclination from one edge face 21 and downwards towards the other end face 20. It is to be noticed that this primary clearance surface 30 is provided on a portion 31 that is protruding laterally from the remainder of the insert which via a step clearance with certain radius extends into a secondary helically twisted clearance surface 18, formed such that its clearance angle increases with increasing cutting depth. The primary clearance surface 30 is formed with essentially constant width along its entire length.

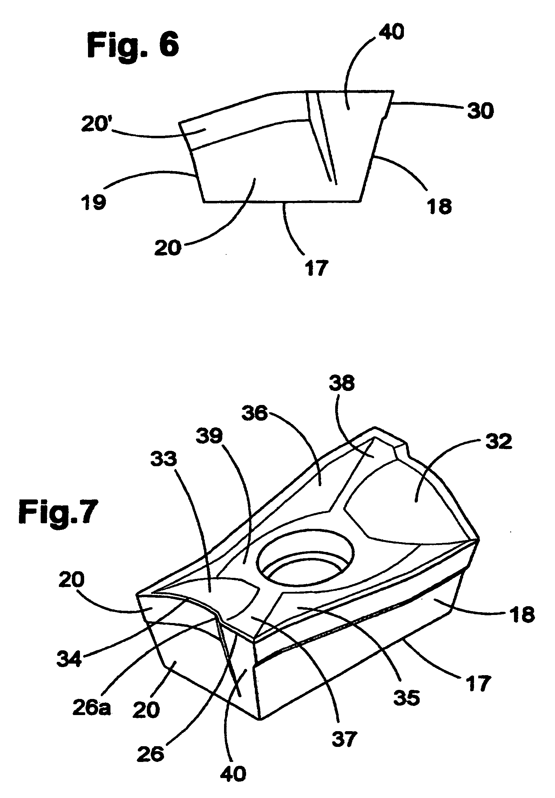

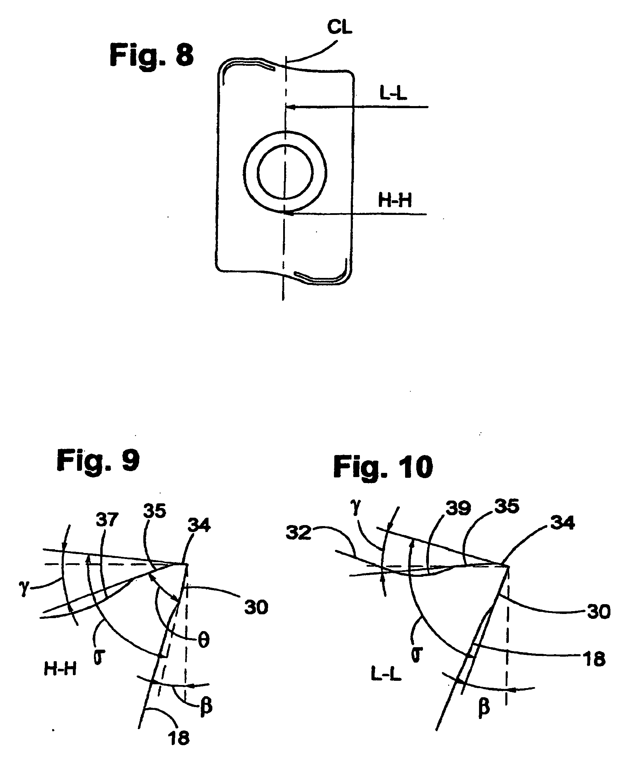

The detailed form of the top face 16 of the insert appears closer in Fig 6-7. Hence, the top face has a recessed central region round the center hole 15. From this region and in direction towards both end faces curved rake surfaces 32 and 33 are extending. Such as is best shown in Fig 7 the top face is confined by a circumferentially extending planar reinforcing chamfer 34, the width of which has been enlarged for clarification purpose. This chamfer 34 forms along the main cutting edge an acute angle with the primary clearance surface 30 such as shown in Fig 8-10, suitably in the magnitude of 75-90°, preferably 84-89°. The reinforcing chamfer 34 along the bevel face 26, 27 shall, however, form a sharper angle with the clearance surface 21 a located next to the bevel face 26, 27. This sharper angle should Ile in the area 70-80°. Those rake surfaces of the top face which connect to and form an intersection with the longitudinal side surfaces 18, 19, have the form of obliquely upwards inclined essentially planar surfaces 35 and 36. Between the rake surfaces 33 and 35 there is provided a substantially planar surface 37 that is recessed in relation to its surrounding surfaces, said surface being inclined downwards whilst having an increasing width up to the corners and in corresponding manner there is a similar narrow surface 38 inclined downwards towards the insert centre in diametrically opposite position. Both these narrow surfaces 37, 38 connect to a recessed, round the center hole 15 located planar surface which is planar and parallel with the bottom surface 17. Thanks to this arrangement with alternating raised and recessed surface parts in near connection to the active cutting corner it has become possible to achieve a favorable optimized form of the chip shape such that it is easier broken up and can be removed more easily from the workpiece. Such as also shown in Fig 6-7 the upper part of the end face 20 is formed as a clearance surface 20', which under acute angle forms an intersection with the upper reinforcing chamfer 34. The surface portion 40, of the end face 20, which connects to the secondary cutting edge 26, has however, the shape of a planar surface, which extends as an unbroken surface from the top face 16 to the bottom surface 17.

In the figures 8-10 is illustrated the cutting Insert by a number of sectional views, wherefrom the contour of the top face 16 should appear more closely. The helically twisted contour of the upper reinforcing chamfer 34 and its connecting chip surface 35 along the main cutting edge 24 should appear therefrom as well as a corresponding helically twisted form of the primary clearance surface 30. In this manner it will be apparent that the angle β constitutes the angle between the primary clearance surface 30 and a normal to the bottom surface 17. It varies such that it becomes smaller in the section H-H and then appears with a larger value In the section L-L. The size of the angle β should be 0-25°. This means that after being functionally secured in the milling body there is obtained a constant clearance angle which makes the chamferwearto become even. The rake angle γ, however, remains constant. With θ is designated the angle between the surfaces 30 and 35 and with σ Is designated the angle between the surfaces 34 and 30. It follows herefrom that the angles γ, θ and σ remain constant in all cross sections along the main cutting edge. Thereby is always achieved a uniform chip formation along each cross section along the main cutting edge which gives increased edge strength which contributes to extended tool life of the cutting insert.

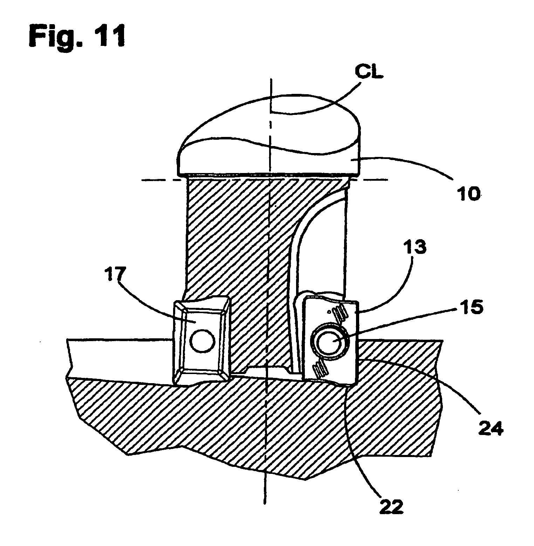

In Fig 11 Is shown how the milling tool with cutting insert according to the invention becomes useful for ramping such that a ramped surface with certain inclination angle, obliquely downwards to the right in the figure, becomes possible. The cutting edges that are operative are designated more darkly In Fig 3 and designated X1, X2 as well as 27a, 27b.

Thanks to the arrangement above with constant functional edge angle along a wave shaped edge line combined with step clearance and large positive axial angle α it has become possible to establish desired precision when providing a 90-degree shoulder of the workpiece. One attains even chamfer wear along the main cutting edge, which adds to extended tool life. Simultaneously the chip formation becomes favorable and machining can occur with moderate cutting forces. Furthermore, such a tool has turned out to manage appropriate machining by circular interpolation such that a ramped surface with inclination angle up to about 10° becomes possible. Another effect is that one limits Increments of appearing notch or spark wear on the cutting edge. Thereby one limits also the drawback with otherwise increasing cutting forces during machining, and contributes additionally to increased tool life.

## Claims

1. Cutting insert for chip forming machining, in particular for end mills, which comprises a basically parallelogram formed body including an upperchip surface (16) and a planar bottom surface (17), wherein the two longitudinal side surfaces (18, 19) therebetween form main cutting edges (24,25) and the two end faces (20, 21) each has a bevel face (26, 27), said bevel faces are provided on portions (22, 23) which protrude from the remainder of the insert body along the longitudinal direction of the side surfaces, which said side surfaces having a width Increasing towards the active cutting corner such that the cutting corner becomes situated on a raised portion, **characterized in that** in combination, the longitudinal side surfaces are generally inclined at acute angle towards the upper chip surface (16) and in obtuse angle towards the bottom surface (17), and the upper portions of said side surfaces (18,19) are provided as wave shaped primary clearance surfaces (30) along the entire main cutting edge with a large overall inclination from one end face (21) downwards towards the second end face (20), which shows functional clearance along the entire cutting edge wherein said clearance surface is provided on a portion (31) extending laterally from the remainder of the cutting insert, and that these primary clearance surfaces (30) via a step clearance extend to a lower portion of adjacent side surface (18, 19), which constitutes a secondary helically twisted clearance surface, the upper portion of each side surface defining a clearance angle with a normal to the bottom surface, the clearance angle increasing in size as a distance away from the active cutting corner increases, and with the cutting insert regarded in plan view said bevel face (26, 27) is provided in essentially straight angle from said main cutting edge (24, 25) whilst separated therefrom by a smoothly curved edge portion (28, 29).

2. Cutting insert according to claim 1, **characterized**
**in that** the primary clearance surface (30) appears with substantially constant width along the entire main cutting edge, and that the clearance surfaces (30) extend along the entire side surface between the two opposed end surfaces (20, 21).

3. Cutting insert according to claims 1-2, **characterized in that** the top surface is confined by a recessed central region and chip surfaces around said region of which the chip surfaces facing said end surfaces (20, 21) are forming convex surfaces (32, 33) whereas the directed chip surfaces adjacent said side surfaces consist of obliquely upwards inclined essentially plane surfaces (35, 36), which under acute angle connect to the primary clearance surfaces (30) located adjacent the main cutting edges.

4. Indexable insert according to anyone of the claims 1-3, **characterized in that** the top face (16) and the bottom surface (17) are non-parallel.

5. indexable insert according to anyone of the claims 1-4, **characterized in that** a planar reinforcing chamfer (34) is provided along the main cutting edges (24, 25) and along the bevel face (26, 27).

6. indexable insert according to claim 5, **characterized in that** the planar reinforcing chamfer (34) and the primary the clearance surface (30) form mutually an angle of 84-89E along the entire main cutting edge (24, 25).

7. Indexable insert according to claim 3, **characterized in that** between the convex the convex surface (32) and the planar surfaces (36) and between the convex surface (33) and the planar surfaces (35) is provided a recessed, essentially planar surface (38) and (37) respectively with a width that increases towards the corner.

8. Indexable insert according to claim 3, **characterized in that** the upper part of the end face is formed as an inclined clearance surface (20') at the portion adjacent the convex chip surface (32, 33) whereas the portion of the end face adjacent the bevel face (26, 27) has the shape of a planar surface (40) which extends as an unbroken surface between the top face (16) and the bottom surface (17).

9. Indexable insert according to claim 5, **characterized in that** the angle between the reinforcing chamfer (34) and the clearance surface (21 a) of the bevel face is smaller than angle between the reinforcing chamfer (34) and the clearance surface (30) along main cutting edge (24).

10. Indexable insert according to anyone of the claims 1-9, **characterized in that** the corner edges (28, 29) each has a first curved portion joined to the nearest main cutting edge (24, 25), a second curved portion (26a, 27a) joined to a respective bevel face (26, 27), and a third curved portion interconnecting the first and second curved portions.

11. Milling tool for rotary machining of metallic workpieces which has a cylindric basic form and is rotatable around a center axis (CL) and the rear part of which is equipped with a shank portion (10) intended to be rotatably clamped In an associated chuck or machine spindle, and which round its periphery is equipped with a number of mutually spaced recesses, each of which is confined by a bottom support surface (14) and one or several side support surfaces upstanding therefrom that extend in the axial and radial directions, **characterized in that** indexable inserts according to any of the preceding claims 1-10 are releaseably clamped in the milling body such that they define clearance angles along main cutting edges (24) and along bevel faces (26) thereof, and each cutting insert in the milling body has a positive axial angle orientation and a negative radial angle orientation.

12. Milling tool according to claim 11, **characterized in, that** the cutting inserts are axially secured in the milling body (10) such that they extend axially beyond the holder body to such extent that an axially oriented ramping edge (X) can come in engagement with a workpiece whilst a curved radial edge (26a, 27a) located radially inside the bevel faces (26, 27) can come in engagement with the workpiece during combined ramping and drilling.

## Patentansprüche

1. Schneideinsatz zur spanabhebenden Bearbeitung insbesondere für Schaftfräser, welcher einen grundsätzlich parallelogrammförmigen Körper einschließlich einer oberen Spanoberfläche (16) und einer ebenen Bodenfläche (17) umfasst, wobei die beiden länglichen Seitenflächen (18, 19) dazwischen Hauptschneidkanten (24, 25) bilden und die beiden Endflächen (20, 21) jeweils eine Abfasungskante (26, Schrägfläche 27) haben, wobei die Abfasungskanten sich an Abschnitten (22, 23) befinden, welche von dem Rest des Einsatzkörpers in der Längsrichtung der Seitenflächen hervorragen, wobei die Seitenflächen eine Breite haben, die in Richtung auf die aktive Schneidecke zunimmt, so dass die Schneidecke auf einem erhabenen Abschnitt zu liegen kommt, **dadurch gekennzeichnet, dass** in Kombination die länglichen Seitenflächen allgemein in einem spitzen Winkel in Richtung auf die obere Spanoberfläche (16) und in einem stumpfen Winkel zu der Bodenfläche (17) hin abgeschrägt sind und die oberen Abschnitte der Seitenflächen (18, 19) als wellenförmige Hauptfreiflächen (30) entlang der gesamten Hauptschneidkante mit einer großen gesamten Abschrägung von einer Endfläche (21) nach unten in Richtung auf die zweite Endfläche (20) versehen sind, die entlang der gesamten Schneidkante einen funktionellen Abstand zeigt, wobei die Freifläche sich an einem Abschnitt (31) befindet, der sich seitlich von dem Rest des Schneideinsatzes aus erstreckt, und dass diese Hauptfreiflächen (30) sich über einen Stufenabstand zu einem unteren Abschnitt der benachbarten Seitenfläche (18, 19) erstrecken, welche eine zweite spiralförmig gedrehte Freifläche bildet, wobei der obere Abschnitt jeder Seitenfläche einen Freiwinkel mit einer Senkrechten zu der Bodenfläche begrenzt, wobei der Freiwinkel mit einem Abstand weg von der aktiven Schneidecke an Größe zunimmt und der Schneideinsatz, in Draufsicht auf die Abfasungsfläche (26, 27) betrachtet, mit einem im wesentlichen gestreckten Winkel von der Hauptschneidkante (24, 25) aus versehen ist, während sie davon durch einen leicht gekrümmten Kantenabschnitt (28, 29) getrennt ist.

2. Schneideinsatz nach Anspruch 1, **dadurch gekennzeichnet, dass** die Hauptfreifläche (30) mit einer im wesentlichen konstanten Breite entlang der gesamten Hauptschneidkante erscheint, und dass die Freiflächen (30) sich entlang der gesamten Seitenfläche zwischen den beiden gegenüberliegenden Endflächen (20, 21) erstrecken.

3. Schneideinsatz nach den Ansprüchen 1 - 2, **dadurch gekennzeichnet, dass** die Oberseitenfläche durch einen mit Vertiefung versehenen mittigen Bereich und Spanflächen um diesen Bereich herum begrenzt wird, wobei die zu den Endflächen (20, 21) hin weisenden Spanflächen konvexe Oberflächen (32, 33) bilden, wohingegen die ausgerichteten Spanflächen nahe den Seitenflächen aus schräg nach oben aufragenden im wesentlichen ebenen Oberflächen (35, 36) bestehen, welche sich unter einem spitzen Winkel an die Hauptfreiflächen (30) anschließen, die sich in der Nähe der Hauptschneidkanten befinden.

4. Wendeschneidplatte nach einem der Ansprüche 1 - 3, **dadurch gekennzeichnet, dass** die Oberseitenfläche (16) und die Bodenfläche (17) nicht parallel sind.

5. Wendeschneidplatte nach einem der Ansprüche 1 - 4, **dadurch gekennzeichnet, dass** sich eine ebene Verstärkungsfase (34) entlang den Hauptschneidkanten (24, 25) und entlang der Abfasungsfläche (26, 27) befindet.

6. Wendeschneidplatte nach Anspruch 5, **dadurch gekennzeichnet, dass** die ebene Verstärkungsfase (34) und die Hauptfreifläche (30) von beiden Seiten einen Winkel von 84 - 89° entlang der gesamten Hauptschneidkante (24, 25) bilden.

7. Wendeschneidplatte nach Anspruch 3, **dadurch gekennzeichnet, dass** sich zwischen der konvexen Oberfläche (32) und der ebenen Oberfläche (36) und zwischen der konvexen Oberfläche (33) und der ebenen Oberfläche (35) eine vertiefte, im wesentlichen ebene Oberfläche (38) beziehungsweise (37) mit einer Breite befindet, die in Richtung auf die Ecke zunimmt.

8. Wendeschneidplatte nach Anspruch 3, **dadurch gekennzeichnet, dass** der obere Teil der Endfläche als eine abgeschrägte Freifläche (20') an dem Abschnitt nahe der konvexen Spanfläche (32, 33) gebildet ist, wohingegen der Abschnitt der Endfläche nahe der Abfasungsfläche (26, 27) die Form einer ebenen Oberfläche (40) hat, welche sich als eine ununterbrochene Oberfläche zwischen der Oberseitenfläche (16) und der Bodenfläche (30) erstreckt.

9. Wendeschneidplatte nach Anspruch 5, **dadurch gekennzeichnet, dass** der Winkel zwischen der Verstärkungsfase (34) und der Freifläche (21 a) der Abfasungsfläche kleiner ist als der Winkel zwischen der Verstärkungsfase (34) und der Freifläche (30) entlang der Hauptschneidkante (24).

10. Wendeschneidplatte nach einem der Ansprüche 1 - 9, **dadurch gekennzeichnet, dass** die Eckkanten (28, 29) jeweils einen mit der nächstgelegenen Hauptschneidkante (24, 25) verbundenen ersten gekrümmten Abschnitt, einen mit der jeweiligen Abfasungsfläche (26, 27) verbundenen zweiten gekrümmten Abschnitt und einen dritten gekrümmten Abschnitt hat, der den ersten und den zweiten gekrümmten Abschnitt miteinander verbindet.

11. Fräswerkzeug zur Drehbearbeitung von Metallwerkstücken, welches eine zylindrische Grundform hat und drehbar um eine Mittelachse (CL) ist und dessen hinterer Teil mit einem Schaftabschnitt (10) versehen ist, der dafür vorgesehen ist, drehbar in einem angeschlossenen Werkzeugfutter oder einer Maschinenspindel eingeklemmt zu werden, und welches um seinen Umfang herum mit einer Reihe von in Abstand zueinander angeordneten Ausnehmungen versehen ist, von denen jede durch eine Bodenstützfläche (14) und einer oder mehreren davon nach oben abstehenden Seitenstützflächen begrenzt wird, die sich in axialer und radialer Richtung erstrecken, **dadurch gekennzeichnet, dass** die Wendeschneidplatten nach einem der vorangehenden Ansprüche 1 - 10 lösbar in dem Fräskörper eingeklemmt sind, so dass sie Freiwinkel entlang den Hauptschneidkanten (24) und entlang deren Abfasungsflächen (26) begrenzen, und dass jeder Schneideinsatz in dem Fräskörper eine positive axiale Winkelausrichtung und eine negative radiale Winkelausrichtung hat.

12. Fräswerkzeug nach Anspruch 11, **dadurch gekennzeichnet, dass** die Schneideinsätze axial so in dem Fräskörper (10) befestigt sind, dass sie sich axial über den Haltekörper hinaus in einem solchen Ausmaß erstrecken, dass eine axial ausgerichtete Steigungskante (X), die in Eingriff mit einem Werkstück kommen kann, während sich eine gekrümmte radiale Kante (26a, 27a), die sich radial innerhalb der Abfasungsflächen (26, 27) befindet, während der kombinierten Fertigung von Steigungen und dem Bohren in Eingriff mit dem Werkstück kommen kann.

## Revendications

1. Plaquette de coupe pour usinage par formation de copeaux, en particulier pour les fraises d'attaque frontale, comprenant un corps de forme fondamentale en parallélogramme comprenant une surface de formation de copeaux supérieure (16) et une surface de fond plane (17), et où les deux surfaces latérales longitudinales (18, 19) entre elles forment des arêtes de coupe principales (24, 25) et les deux faces d'extrémité (20, 21) comportent chacune une face en biseau (26, 27), les dites faces en biseau étant situées sur des parties (22, 23) en saillie du reste du corps de plaquette selon la direction des surfaces latérales, les surfaces latérales ayant une largeur croissante vers le coin de coupe actif de sorte que le coin de coupe se trouve situé sur une partie surélevée, **caractérisée par le fait que**, en combinaison, les surfaces latérales longitudinales sont globalement inclinées selon un angle aigu vers la surface de formation de copeaux supérieure (16) et selon un angle obtus vers la surface de fond (17), et les parties supérieures des surfaces latérales (18, 19) sont sous forme de surfaces de dépouille primaires ondulées (30) le long de la totalité de l'arête de coupe principale avec une impontante inclinaison globale depuis une face d'extrémité (21) en descendant vers la seconde face d'extrémité (20) qui présent une dépouille fonctionnelle le long de tout l'arête de coupe, et où la dite surface de dépouille comporte une partie (31) s'étendant latéralement depuis de reste de la plaquette de coupe, et que ces surfaces de dépouille primaires (30) s'étendent, via une dépouille étagée, jusqu'à une partie inférieure d'une surface latérale adjacente (18, 19), qui constitue une surface de dépouille secondaire torsadée en hélice, la partie supérieure de chaque surface latérale définissant un angle de dépouille avec une normale à la surface de fond, l'angle de dépouille étant de taille croissante à mesure que croît une distance d'écart par rapport au coin de coupe actif, et, la plaquette de coupe étant vue en plan, la face en biseau (26, 27) se trouve sensiblement à angle droit par rapport à l'arête de coupe principale (24, 25) tout en en étant séparée par une partie de bord à courbe douce (28, 29).

2. Plaquette de coupe selon la revendication 1, **caractérisée par le fait que** la surface de dépouille primaire (30) présente une largeur sensiblement constante le long de la totalité de l'arête de coupe principale, et que les surfaces de dépouille (30) s'étendent le long de la totalité de la surface latérale entre les deux surfaces d'extrémité opposées (20, 21).

3. Plaquette de coupe selon les revendications 1 et 2, **caractérisée par le fait que** la surface supérieure est limitée par une région centrale en creux et des surfaces de formation de copeaux entourant cette région pour laquelle les surfaces de formation de copeaux en regard des surfaces d'extrémité (20, 21) forment des surfaces convexes (32, 33) alors que les surfaces de formation de copeaux dirigées adjacentes aux surfaces latérales consistent en des surfaces sensiblement planes (35, 36) inclinées de façon oblique en montant, qui, selon un angle aigu, sont reliées aux surfaces de dépouille primaires (30) situées de façon adjacente aux arêtes de coupe principales.

4. Plaquette de coupe selon l'une quelconque des revendications 1 à 3,
**caractérisée par le fait que** la face supérieure (16) et la surface de fond (17) ne sont pas parallèles.

5. Plaquette de coupe indexable selon l'une quelconque des revendications 1 à 4, **caractérisée par le fait qu'**un chanfrein de renforcement plan (34) est situé le long des arêtes de coupe principales (24, 25) et le long de la face en biseau (26, 27).

6. Plaquette de coupe selon la revendication 5, **caractérisée par le fait que** le chanfrein de renforcement plan (34) et la surface de dépouille primaire (30) forment mutuellement un angle de 84 à 89 degrés le long de la totalité de l'arête de coupe principale (24, 25).

7. Plaquette de coupe selon la revendication 3, **caractérisée par le fait que**, entre la surface convexe (32) et les surfaces planes (36) et entre la surface convexe (33) et les surfaces planes (35) se trouve une surface sensiblement plane en creux respectivement (38) et (39) de largeur croissante vers le coin.

8. Plaquette de coupe selon la revendication 3, **caractérisée par le fait que** la partie supérieure de la face d'extrémité est sous forme de surface de dépouille inclinée (20') à la partie adjacente à la surface convexe de formation de copeaux (32, 33) alors que la partie de la face d'extrémité adjacente à la face en biseau (26, 27) présente la forme d'une surface plane (40) s'étendant comme surface sans rupture entre la face supérieure (16) et la surface de fond (17).

9. Plaquette de coupe indexable selon la revendication 5, **caractérisée par le fait que** l'angle entre le chanfrein de renforcement (34) et la surface de dépouille (21a) de la face en biseau est inférieur à l'angle entre le chanfrein de renforcement (34) et la surface de dépouille (30) le long de l'arête de coupe (24).

10. Plaquette de coupe selon l'une quelconque des revendications 1 à 9,
**caractérisée par le fait que** les arêtes de coin (28, 29) ont chacune une première partie courbe reliée à l'arête de coupe principale la plus proche (24, 25), une deuxième partie courbe (26a, 27a) reliée à une face en biseau respective (26, 27), et une troisième partie courbe reliant les première et deuxième parties courbes.

11. Outil de fraisage pour usiner en tournant des pièces métalliques, qui a une forme de base cylindrique et peut tourner autour d'un axe central (CL) et dont la partie arrière comporte une partie de fût (10) prévue pour être serrée avec possibilité de rotation dans un mandrin associé ou une broche de machine, et qui, près de sa périphérie, comporte un certain nombre de cavités mutuellement espacées, chacune d'entre elles étant limitée par une surface de fond porteuse (14) et une ou plusieurs surfaces porteuses latérales s'en élevant et s'étendant dans les directions axiale et radiale, **caractérisé par le fait que** les plaquettes de coupe indexables selon l'une quelconque des revendications 1 à 10 sont bridées de façon amovible dans le corps de fraise de sorte qu'elles définissent des angles de dépouille le long des arêtes de coupe principales (24) et le long de leurs faces en biseau (26), et chaque plaquette de coupe dans le corps de fraise présente une orientation à angle axial positif et une orientation à angle radial négatif.

12. Outil de fraisage selon la revendication 11, **caractérisé par le fait que** les plaquettes de coupe sont fixées axialement dans le corps de fraise (10) de façon qu'elles s'étendent axialement au-delà du corps porteur selon une certaine valeur telle qu'une arête pour rampe (X) orientée axialement peut venir au contact d'une pièce à usiner alors qu'une arête radiale courbe (26a, 27a) située radialement à l'intérieur des faces en biseau (26, 27) peut venir au contact de la pièce à usiner pendant une taille de rampe et un perçage combinés.
